# EUROPÄISCHE PATENTSCHRIFT

(11) **EP 3 377 766 B1**
(45) Veröffentlichungstag und Bekanntmachung des Hinweises auf die Patenterteilung: **03.07.2024**
(21) Anmeldenummer: 16798173.7
(22) Anmeldetag: 18.11.2016
(51) Int. Cl.: F04C 18/02, F04C 29/00

(54) **VERDRÄNGERMASCHINE NACH DEM SPIRALPRINZIP, VERFAHREN ZUM BETREIBEN EINER VERDRÄNGERMASCHINE, FAHRZEUGKLIMAANLAGE UND FAHRZEUG**
DISPLACEMENT MACHINE ACCORDING TO THE SPIRAL PRINCIPLE, METHOD FOR OPERATING A DISPLACEMENT MACHINE, VEHICLE AIR-CONDITIONING SYSTEM, AND VEHICLE
MACHINE À DÉPLACEMENT POSITIF SELON LE PRINCIPE DE SPIRALE, PROCÉDÉ DE FONCTIONNEMENT D'UNE MACHINE À DÉPLACEMENT POSITIF, INSTALLATION DE CLIMATISATION DE VÉHICULE ET VÉHICULE

(30) Priorität: 20.11.2015 DE 102015120151
(43) Veröffentlichungstag der Anmeldung: 26.09.2018
(73) Patentinhaber: OET GmbH, 6890 Lustenau (AT)
(72) Erfinder: LÄSSER, Roman, 6922 Wolfurt (AT); SCHMÄLZLE, Christian, 6923 Lauterach (AT); WUITZ, Uwe, 6890 Lustenau (AT); BUSCH, Christian, 6800 Feldkirch (AT); OBRIST, Frank, 6900 Bregenz (AT)
(74) Vertreter: Meissner Bolte Partnerschaft mbB
(86) Internationale Anmeldenummer: PCT/EP2016/078141
(87) Internationale Veröffentlichungsnummer: WO 2017/085256

(56) Entgegenhaltungen:
- WO-A1-2009/017157
- DE-A1-102013 020 762
- DE-A1-102013 021 250
- DE-T5-112005 002 722
- JP-A- 2010 185 299
- US-A1- 2006 254 309
- US-A1- 2010 158 710

## Beschreibung

Die Erfindung betrifft eine Verdrängermaschine nach dem Spiralprinzip, insbesondere Scrollverdichter oder Scrollexpander, mit einer Hochdruckkammer, einer Niederdruckkammer und einer orbitierenden Verdrängerspirale, die in eine Gegenspirale derart eingreift, dass zwischen der Verdrängerspirale und der Gegenspirale Kammern gebildet werden, um ein Arbeitsmedium aufzunehmen, wobei zwischen der Niederdruckkammer und der Verdrängerspirale eine Gegendruckkammer ausgebildet ist. Des Weiteren betrifft die Erfindung ein Verfahren zum Betreiben einer erfindungsgemäßen Verdrängermaschine. Ferner betrifft die Erfindung eine Fahrzeugklimaanlage sowie ein Fahrzeug mit einer erfindungsgemäßen Verdrängermaschine.

Scrollverdichter und/oder Scrollexpander sind aus dem Stand der Technik hinlänglich bekannt. Diese umfassen eine Hochdruckkammer, eine Niederdruckkammer und eine orbitierende Verdrängerspirale. Die orbitierende Verdrängerspirale greift, wie dies beispielsweise in EP 2 806 164 A1 dargestellt ist, in eine Gegenspirale derart ein, dass zwischen der Verdrängerspirale und der Gegenspirale Kammern gebildet werden, um ein Arbeitsmedium aufzunehmen. Zwischen der Niederdruckkammer und der Verdrängerspirale ist ein Aufnahmeraum, nämlich eine Gegendruckkammer ausgebildet. Eine derartige Gegendruckkammer ist auch unter dem Begriff Back-Pressure-Raum bekannt.

Auch aus DE 10 2013 020 762 A1 und DE 10 2013 021 250 A1 sind entsprechende Scrollmaschinen bekannt.

Der Erfindung liegt die Aufgabe zu Grunde, eine Verdrängermaschine nach dem Spiralprinzip derart weiterzubilden, dass der Druck in der Gegendruckkammer auf variable Betriebspunkte eingestellt und/oder äußerst exakt eingestellt werden kann. Der Erfindung liegt ferner die Aufgabe zu Grunde, ein weiterentwickeltes Verfahren zum Betreiben einer Verdrängermaschine nach dem Spiralprinzip anzugeben. Außerdem besteht die Aufgabe darin, eine Fahrzeugklimaanlage und/oder ein Fahrzeug mit einer weiterentwickelten Verdrängermaschine nach dem Spiralprinzip anzugeben.

Erfindungsgemäß wird diese Aufgabe im Hinblick auf die Verdrängermaschine nach dem Spiralprinzip durch den Gegenstand des Patentanspruches 1, im Hinblick auf das Verfahren zum Betreiben einer Verdrängermaschine durch den Gegenstand des Patentanspruches 10, im Hinblick auf die Fahrzeugklimaanlage durch den Gegenstand des Patentanspruches 13 und im Hinblick auf das Fahrzeug durch den Gegenstand des Patentanspruches 14 und/oder durch den Gegenstand des Patentanspruches 15 gelöst.

Vorteilhafte und zweckmäßige Ausgestaltungen der erfindungsgemäßen Verdrängermaschine nach dem Spiralprinzip bzw. des erfindungsgemäßen Verfahrens zum Betreiben einer Verdrängermaschine bzw. der erfindungsgemäßen Fahrzeugklimaanlage sind in den Unteransprüchen angegeben.

Die Erfindung beruht auf dem Gedanken, eine Verdrängermaschine nach dem Spiralprinzip, insbesondere einen Scrollverdichter oder einen Scrollexpander, mit einer Hochdruckkammer, einer Niederdruckkammer und einer orbitierenden Verdrängerspirale, die in eine Gegenspirale derart eingreift, dass zwischen der Verdrängerspirale und der Gegenspirale Kammern gebildet werden, um ein Arbeitsmedium aufzunehmen, anzugeben. Zwischen der Niederdruckkammer und der Verdrängerspirale ist eine Gegendruckkammer ausgebildet.

Erfindungsgemäß ist eine mit der Gegendruckkammer fluidverbundene Druckregeleinrichtung ausgebildet, die mittels eines von einer Recheneinheit vorgegebenen Sollwerts eine Druckdifferenz zwischen der Gegendruckkammer und der Niederdruckkammer einstellt. Mit Hilfe der Druckregeleinrichtung und eines von einer Recheneinheit vorgegebenen Sollwerts kann somit ein Druck in der Gegendruckkammer auf variable Betriebspunkte eingestellt werden.

In einer Ausführungsform der Erfindung werden zwischen der Verdrängerspirale und der Gegenspirale radial nach innen wandernde Kammern gebildet, um ein Arbeitsmedium, insbesondere ein Kältemittel, aus der Niederdruckkammer aufzunehmen, insbesondere anzusaugen, zu verdichten und in die Hochdruckkammer auszustoßen. Die Verdrängermaschine arbeitet gemäß dieser Ausführungsform der Erfindung insbesondere als Scrollverdichter. Diese Verdrängermaschine ist mit anderen Worten ein Scrollkompressor.

In einer weiteren Ausführungsform der Erfindung werden zwischen der Verdrängerspirale und der Gegenspirale radial nach außen wandernde Kammern gebildet, um ein Arbeitsmedium, insbesondere ein Arbeitsfluid, insbesondere ein Wärmemittel, aus der Hochdruckkammer aufzunehmen, zu expandieren und in die Niederdruckkammer auszuschieben. Gemäß dieser dargestellten Ausführungsform der Erfindung arbeitet die Verdrängermaschine nach dem Spiralprinzip insbesondere als Scrollexpander. Die beschriebene Arbeitsweise bzw. der beschriebene Prozess im Zusammenhang mit einem Scrollexpander kann auch als *Clausius-Rankine-*Prozess bezeichnet werden. Der mit Hilfe der erfindungsgemäßen Verdrängermaschine durchführbare Prozess ist auch als *Organic Rankine Cycle* (ORC) bekannt, wobei der organische Bestandteil z.B. Ethanol sein kann.

Die Druckregeleinrichtung umfasst erfindungsgemäß ein elektrisch ansteuerbares Regelventil sowie eine Drossel. Es ist möglich, dass das elektrisch ansteuerbare Regelventil die Gegendruckkammer mit der Hochdruckkammer oder der Niederdruckkammer fluidverbindet. Mit anderen Worten ist die Gegendruckkammer mittels des elektrisch ansteuerbaren Regelventils entweder mit der Hochdruckkammer oder der Niederdruckkammer je nach Ausbildung der Verdrängermaschine fluidverbunden.

Das elektrisch ansteuerbare Regelventil umfasst erfindungsgemäß eine verschiebbare Ventilnadel, die elektromagnetisch ansteuerbar ist. Die verschiebbare Ventilnadel kann auch als verschiebbarer Stößel bezeichnet werden. Die verschiebbare Ventilnadel stellt zu einem Gehäuse des elektrisch ansteuerbaren Regelventils beispielsweise einen Ringspalt ein, so dass mittels des Ringspaltes eine Fluidverbindung von der Gegendruckkammer zur Hochdruckkammer oder von der Gegendruckkammer zur Niederdruckkammer gebildet ist. Die Ventilnadel ist vorzugsweise in einer Magnetspule angeordnet, so dass durch einen auf die Magnetspule wirkenden Steuerstrom die elektromagnetische Kraft auf die Ventilnadel einstellbar ist.

In einer Ausführungsform der Erfindung ist das elektrisch ansteuerbare Regelventil derart in der Verdrängermaschine angeordnet, dass das Regelventil die Gegendruckkammer und die Niederdruckkammer fluidverbindet, wobei zwischen der Hochdruckkammer und der Gegendruckkammer eine von der Druckregeleinrichtung umfasste Drossel angeordnet ist.

In dieser Ausführungsform der Erfindung bewirkt die Drossel bei der Ausbildung der Verdrängermaschine als Scrollverdichter, dass das aus der Hochdruckkammer und in die Gegendruckkammer strömende Arbeitsmedium zunächst hinsichtlich des Druckes reduziert wird. Ausgehend von der Gegendruckkammer kann das Arbeitsmedium mittels des elektrisch ansteuerbaren Regelventils in die Niederdruckkammer strömen.

In einer weiteren und/oder alternativen Ausführungsform der Erfindung ist ein/das elektrisch ansteuerbare Regelventil derart angeordnet, dass das Regelventil die Hochdruckkammer und die Gegendruckkammer fluidverbindet, wobei zwischen der Gegendruckkammer und der Niederdruckkammer eine/die Drossel angeordnet ist.

Sofern die Verdrängermaschine als Scrollverdichter ausgebildet ist, bewirkt das elektrisch ansteuerbare Regelventil eine Fluidverbindung zwischen der Hochdruckkammer und der Gegendruckkammer, so dass das Arbeitsmedium von der Hochdruckkammer in die Gegendruckkammer strömen kann. Mit Hilfe des elektrisch ansteuerbaren Regelventils, insbesondere durch das Einstellen eines Ringspalts zwischen einer verschiebbaren Ventilnadel und einem Gehäuseabschnitt, kann das Strömen des Arbeitsmediums von der Hochdruckseite zur Gegendruckkammer eingestellt werden.

Vorzugsweise ist die Verdrängerspirale relativ zur Gegenspirale in axialer Richtung beweglich. Somit ist die orbitierende, also die drehbar bewegliche Verdrängerspirale zusätzlich in axialer Richtung beweglich. Hierbei kann die Verdrängerspirale in Richtung der Gegenspirale und von der Gegenspirale weg bewegt werden. Vorzugsweise ist die Gegenspirale vollständig fest in die Verdrängermaschine eingebaut. Mit anderen Worten ist die Gegenspirale weder in axialer Richtung beweglich noch drehbar beweglich.

Ein von der Verdrängerspirale auf die Gegenspirale in axialer Richtung wirkender Anpressdruck ist vorzugsweise durch den in der Gegendruckkammer herrschenden Druck einstellbar. Mit anderen Worten wird die Bewegung der Verdrängerspirale in axialer Richtung vorzugsweise durch den in der Gegendruckkammer herrschenden Druck bewirkt. In Abhängigkeit von dem in der Gegendruckkammer herrschenden Druck kann ein von der Verdrängerspirale auf die Gegenspirale in axialer Richtung wirkender Anpressdruck eingestellt werden.

Die erfindungsgemäße Verdrängermaschine kann als elektrisch und/oder elektromotorisch angetriebene Verdrängermaschine oder als Verdrängermaschine mit mechanischem Antrieb ausgebildet sein.

Bei dem Arbeitsmedium handelt es sich um COz oder R134a oder R1234yf oder Butan oder Ethanol oder Cyclopentan.

Ein weiterer Aspekt der Erfindung betrifft ein Verfahren zum Betreiben einer erfindungsgemäßen Verdrängermaschine, wie diese vorher beschrieben wurde. Das Verfahren zum Betreiben einer Verdrängermaschine umfasst erfindungsgemäß die Schritte:
a) Ermitteln eines Druckwerts P_{D} in einem Hochdruckbereich der Verdrängermaschine oder in einem Hochdruckbereich eines Systems, in dem die Verdrängermaschine eingebaut ist,
b) Weiterleiten des ermittelten Druckwerts P_{D} an eine Recheneinheit,
c) Festlegen eines Druckdifferenzwertes Δ P_{BP} zwischen einem in einer Gegendruckkammer herrschenden Gegendruck P_{BP} und einem in einer Niederdruckkammer herrschenden Niederdruck Ps anhand einer Kennlinie und/oder eines Kennfelds mit Hilfe des ermittelten Druckwerts P_{D}, wobei die Kennlinie und/oder das Kennfeld in der Recheneinheit gespeichert ist,
d) Ansteuern einer Druckregeleinrichtung, insbesondere eines elektrisch ansteuerbaren Regelventils, durch einen Steuerstrom auf eine Magnetspule und selbstständiges Einregeln des Druckdifferenzwertes Δ P_{BP} durch das elektrische Regelventil,
   wobei
   beim Ansteuern des elektrisch ansteuerbaren Regelventils der festgelegte Druckdifferenzwert Δ P_{BP} einer elektrischen Stromstärke zum Ansteuern einer Ventilnadel, die in einer Magnetspule angeordnet ist, zugeordnet wird.

Bei dem Hochdruckbereich der Verdrängermaschine kann es sich beispielsweise um eine Hochdruckkammer der Verdrängermaschine handeln. Alternativ und/oder zusätzlich ist es denkbar, dass der Druckwert P_{D} in einem Hochdruckbereich eines Systems, wie z.B. einer Klimaanlage und/oder einem Fahrzeug, in dem die Verdrängermaschine eingebaut ist, ermittelt bzw. gemessen wird. Eine erfindungsgemäße Verdrängermaschine kann entsprechend des beschriebenen Verfahrens in einem Hochdruckbereich, insbesondere der Hochdruckkammer, einen Sensor zur Erfassung des Druckwertes in der Hochdruckkammer aufweisen.

Anhand des ermittelten Druckwertes P_{D} kann anhand einer Kennlinie und/oder anhand eines Kennfelds ein Druckdifferenzwert Δ P_{BP} festgelegt werden. Mit anderen Worten ist einem ermittelten Druckwert P_{D} in einer Kennlinie und/oder einem Kennfeld ein idealer bzw. ein einzustellender Druckdifferenzwert Δ P_{BP} zugeordnet. Der Druckdifferenzwert Δ P_{BP} ist zwischen der Gegendruckkammer und der Niederdruckkammer ausgebildet.

Mit Hilfe des ermittelten Druckwertes wird mit anderen Worten das elektrisch ansteuerbare Regelventil, angesteuert. Hierzu wird die Magnetspule des elektrisch ansteuerbaren Regelventils angesteuert. Dies erfolgt vorzugsweise durch einen Steuerstrom, der in einer Kennlinie und/oder einem Kennfeld in der Recheneinheit gespeichert ist und an die Magnetspule angelegt wird.

Aufgrund des Anlegens eines mit dem ermittelten Druckwerts P_{D} in Relation stehenden Steuerstroms auf eine Magnetspule, ist es möglich, dass der festgelegte Druckdifferenzwert Δ P_{BP} selbstständig durch das elektrische Regelventil eingeregelt werden kann.

Bei dem elektrisch ansteuerbaren Regelventil handelt es sich vorzugsweise um ein sich mechanisch selbstregelndes Ventil. Die mechanische Selbstregelung erfolgt aufgrund einer ausgeglichenen Druckbilanz bzw. mit anderen Worten durch ein ausgeglichenes Kräftegleichgewicht.

Mit Hilfe des festgelegten Druckdifferenzwertes Δ P_{BP} und dem damit einhergehenden festgelegten Steuerstrom wird auf die Ventilnadel des elektrisch ansteuerbaren Regelventils eine elektromagnetische Kraft eingestellt. Auf die Ventilnadel wirkt neben einer Federkraft und der Kraft bzw. dem Druck der Gegendruckkammer auch die elektromagnetische Kraft durch die Magnetspule. Das erfindungsgemäße Verfahren zum Betreiben einer Verdrängermaschine wird gemäß der dargestellten Ausführungsform vor allen Dingen bei Verdrängermaschinen angewandt, die ein elektrisch ansteuerbares Regelventil aufweisen, das die Gegendruckkammer und die Niederdruckkammer fluidverbindet. Demnach wirkt auf die Ventilnadel auch der Druck bzw. die Kraft der Niederdruckkammer.

Aufgrund des Steuerstroms, mit dem die Magnetspule beaufschlagt wird, wird eine elektromagnetische Kraft eingestellt, die der Kraft der Niederdruckkammer und der Kraft der Gegenkammer entgegensteht. Um zu einer ausgeglichenen Kraftbilanz zu gelangen, regelt das elektrisch ansteuerbare Regelventil selbstständig den Druck der Gegenkammer abhängig vom Druck der Niederdruckkammer. Ein Durchtrittsquerschnitt, der als Ringfläche zwischen der Ventilnadel und einem Gehäuseabschnitt des Regelventils ausgebildet wird, wird selbstständig durch das elektrisch ansteuerbare Regelventil eingestellt. Der Durchtrittsquerschnitt zwischen dem Druck der Niederdruckkammer und dem Druck der Gegendruckkammer wird mit anderen Worten selbstständig durch das elektrisch ansteuerbare Regelventil eingeregelt.

In einer Ausführungsform der Erfindung umfasst das Verfahren die folgenden Schritte:
a) Ermitteln des Druckwertes P_{D} in dem Hochdruckbereich der Verdrängermaschine oder in dem Hochdruckbereich des Systems, in dem die Verdrängermaschine eingebaut ist, und eines Druckwertes P_{S} in eder Niederdruckkammer der Verdrängermaschine,
b) Weiterleiten der ermittelten Druckwerte P_{D} und P_{S} an die Recheneinheit,
c) Festlegen des Druckdifferenzwertes Δ P_{BP} zwischen dem in einer Gegendruckkammer herrschenden Gegendruck P_{BP} und dem in der Niederdruckkammer herrschenden Niederdruck P_{S} anhand der Kennlinie und/oder des Kennfelds mit Hilfe der ermittelten Druckwerte P_{D} und P_{S}, wobei die Kennlinie und/oder das Kennfeld in der Recheneinheit gespeichert ist,
d) Ansteuern des elektrisch ansteuerbaren Regelventils, durch den Steuerstrom auf die Magnetspule und selbstständiges Einregeln des Druckdifferenzwertes Δ P_{BP} durch das elektrische Regelventil.

Dieses Verfahren wird vorzugsweise mit Hilfe einer erfindungsgemäßen Verdrängermaschine durchgeführt, die ein elektrisch ansteuerbares Regelventil aufweist, das die Hochdruckkammer und die Gegendruckkammer fluidverbindet, wobei zwischen der Gegendruckkammer und der Niederdruckkammer eine Drossel angeordnet ist. Der ermittelte Druckwert P_{D} in einem Hochdruckbereich der Verdrängermaschine kann beispielsweise in einer Hochdruckkammer der Verdrängermaschine ermittelt werden. Alternativ und/oder zusätzlich ist es möglich, dass der Druckwert P_{D} in einem Hochdruckbereich eines Systems, wie z.B. einem Fahrzeug und/oder einer Klimaanlage, in dem die Verdrängermaschine eingebaut ist, ermittelt wird.

Die zugehörige erfindungsgemäße Verdrängermaschine kann diesbezüglich in einem Hochdruckbereich der Verdrängermaschine, insbesondere in einer Hochdruckkammer der Verdrängermaschine, einen Drucksensor zur Ermittlung des Druckwerts P_{D} aufweisen. Bei dem Druckwert P_{D} handelt es sich vorzugsweise um den in der Verdrängermaschine herrschenden Hochdruck bzw. um den in dem System, in dem die Verdrängermaschine eingebaut ist, herrschenden Hochdruck.

Bezüglich des in der Niederdruckkammer zu messenden Drucks P_{S} kann die erfindungsgemäße Verdrängermaschine in der Niederdruckkammer, einen Drucksensor aufweisen, der den Niederdruck P_{S} ermittelt. Bei dem Niederdruck P_{S} handelt es sich somit um den in der Niederdruckkammer herrschenden Niederdruck.

Mit Hilfe der ermittelten Druckwerte P_{D} und P_{S}, d.h. mit Hilfe des ermittelten Wertes bezüglich des Niederdrucks P_{S} und des ermittelten Wertes bezüglich des Hochdrucks P_{D} wird ein Druckdifferenzwert Δ P_{BP} festgelegt. Der festgelegte Druckdifferenzwert Δ P_{BP} steht in Verbindung mit einem festgelegten Steuerstrom, mit dem eine Magnetspule der Druckregeleinrichtung, insbesondere des elektrisch ansteuerbaren Regelventils, beaufschlagt wird. Auf das Regelventil wirken eine Federkraft, die Kraft bzw. der Druck der Gegendruckkammer sowie die Kraft bzw. der Druck der Hochdruckkammer. Außerdem drückt auf dieses elektrisch ansteuerbare Regelventil eine elektromagnetische Kraft der Magnetspule, wobei die elektromagnetische Kraft durch den Steuerstrom einstellbar ist.

Im Zusammenhang mit dem Verfahren zum Betreiben einer Verdrängermaschine ist vorgesehen, dass beim Ansteuern des elektrisch ansteuerbaren Regelventils, der festgelegte Druckdifferenzwert Δ P_{BP} einer elektrischen Stromstärke zum Ansteuern der Ventilnadel, die in einer Magnetspule angeordnet ist, zugeordnet wird.

Die Magnetspule des Ventilelements wird mit der elektrischen Stromstärke beaufschlagt, so dass eine auf die Ventilnadel wirkende elektromagnetische Kraft eingestellt wird.

Mit Hilfe der erfindungsgemäßen Verfahren zum Betreiben einer Verdrängermaschine ist es möglich, den Druck in der Gegendruckkammer auf variable Betriebspunkte einzustellen. Der Druck kann insbesondere sehr genau nach Vorgabe eingestellt werden. Dies erfolgt insbesondere durch Einstellen des Druckdifferenzwertes zwischen der Gegendruckkammer und der Niederdruckkammer.

Ein weiterer nebengeordneter Aspekt der Erfindung betrifft eine Fahrzeugklimaanlage mit einer erfindungsgemäßen Verdrängermaschine, insbesondere mit einem erfindungsgemäßen Scrollverdichter. Es ergeben sich ähnliche Vorteile, wie diese bereits im Zusammenhang mit der erfindungsgemäßen Verdrängermaschine und/oder dem erfindungsgemäßen Verfahren zum Betreiben einer Verdrängermaschine angegeben sind.

Die Fahrzeugklimaanlage enthält Kältemittel, wobei es sich bei diesem Kältemittel beispielsweise um COz oder R134a oder R1234yf oder Butan oder Ethanol oder Wasser handelt.

Als Kältemittel kann insbesondere Hydrofluorocarbon (HFC) zum Einsatz kommen. Bei R134a handelt es sich um ein typisches Hydrofluorocarbon. Des Weiteren ist es möglich, dass Hydrofluorooleofin (HFO) als Kältemittel verwendet wird. Beispielhaft wird diesbezüglich auf R1234yf verwiesen. Auch Hydrocarbon (HC) kann als Kältemittel in einer Fahrzeugklimaanlage zum Einsatz kommen. Typische Hydrocarbone sind Propan bzw. Butan. Bei dem ebenfalls angegebenen COz, Ethanol bzw. Wasser handelt es sich um eigenständige Arbeitsmedien.

Ein weiterer nebengeordneter Aspekt der Erfindung betrifft ein Fahrzeug, insbesondere ein Hybridfahrzeug, mit einer erfindungsgemäßen Verdrängermaschine und/oder mit einer erfindungsgemäßen Fahrzeugklimaanlage. Es ergeben sich ähnliche Vorteile, wie diese bereits im Zusammenhang mit der erfindungsgemäßen Verdrängermaschine und/oder dem erfindungsgemäßen Verfahren zum Betreiben einer Verdrängermaschine und/oder im Zusammenhang mit der erfindungsgemäßen Fahrzeugklimaanlage angegeben sind. Insbesondere handelt es sich bei dem erfindungsgemäßen Fahrzeug um ein elektrisches Hybridfahrzeug.

Ein weiterer nebengeordneter Aspekt der Erfindung betrifft ein Fahrzeug, insbesondere einen Lastkraftwagen, mit einer erfindungsgemäßen Verdrängermaschine, insbesondere mit einem erfindungsgemäßen Scrollexpander. Es ergeben sich ähnliche Vorteile, wie diese bereits im Zusammenhang mit der erfindungsgemäßen Verdrängermaschine und/oder mit dem erfindungsgemäßen Verfahren zum Betreiben einer Verdrängermaschine angegeben sind. Im Bereich von Lastkraftwagen sind Scrollexpander vorzugsweise im Zusammenhang mit einer Abgasrückgewinnung bzw. Energierückgewinnung einzusetzen. Hierbei ist es möglich, sowohl Scrollexpander mit mechanischem Antrieb als auch elektrisch und/oder elektromotorisch angetriebene Scrollexpander zu verwenden.

Die Erfindung wird im Folgenden anhand von Ausführungsbeispielen unter Bezugnahme auf die beigefügten, schematischen Zeichnungen näher erläutert.

### Darin zeigen

- Fig. 1: einen Längsschnitt einer erfindungsgemäßen Verdrängermaschine, insbesondere eines Scrollverdichters gemäß einer ersten Ausführungsform;
- Fig. 2: einen Längsschnitt einer erfindungsgemäßen Verdrängermaschine, insbesondere eines Scrollverdichters gemäß einem zweiten Ausführungsbeispiel;
- Fig. 3: einen Längsschnitt durch ein elektrisch ansteuerbares Regelventil; und
- Fig. 4: eine Prinzipdarstellung bezüglich einer ersten Ausführungsform eines erfindungsgemäßen Verfahrens zum Betreiben einer Verdrängermaschine.

Nachfolgend werden im Detail zwei Ausführungsbeispiele hinsichtlich einer erfindungsgemäßen Verdrängermaschine dargestellt, wobei es sich in den dargestellten Ausführungsbeispielen um Scrollverdichter handelt. Es sei darauf hingewiesen, dass die erfindungsgemäße Verdrängermaschine auch als Scrollexpander ausgebildet sein kann und als Scrollexpander betrieben werden kann.

Im Folgenden werden für gleiche und gleich wirkende Teile dieselben Bezugsziffern verwendet.

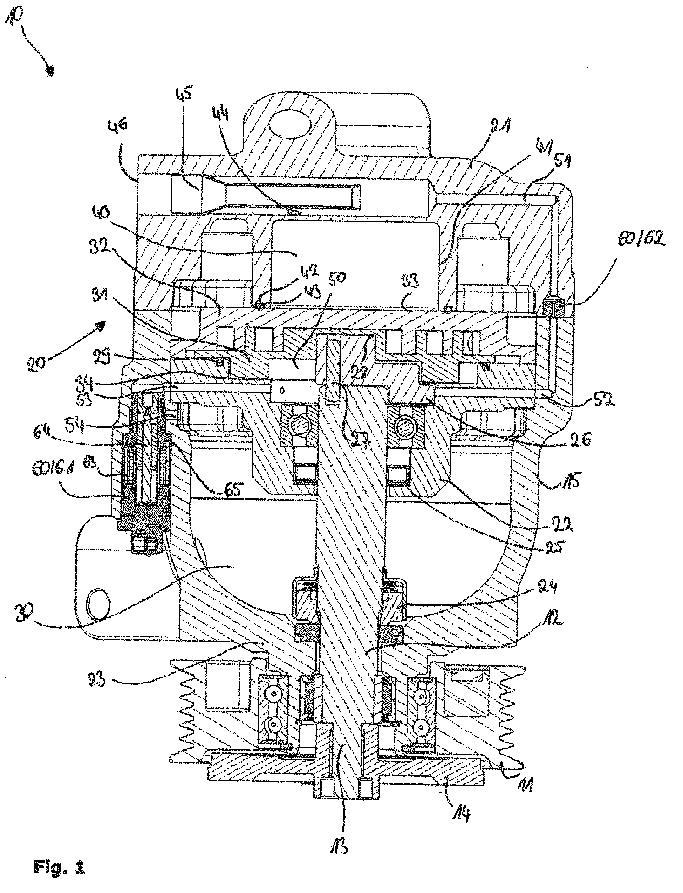

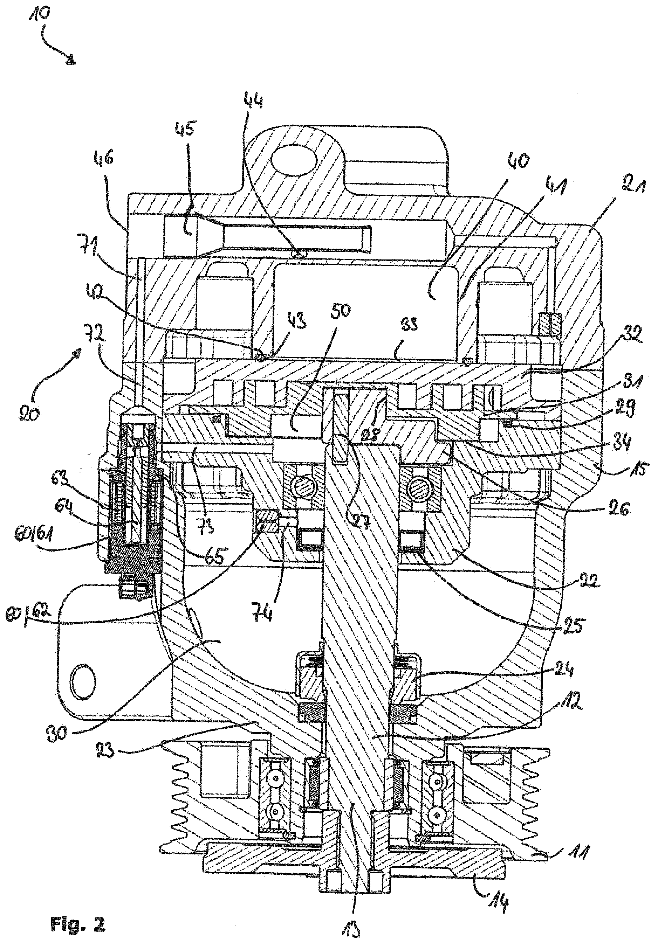

Der im Zusammenhang mit den Fig. 1 und 2 im Detail beschriebene Scrollverdichter 10 kann beispielsweise als Verdichter einer Fahrzeugklimaanlage wirken. Eine Fahrzeugklimaanlage, wie z.B. eine CO₂-Fahrzeugklimaanlage, weist typischerweise einen Gaskühler, einen inneren Wärmetauscher, eine Drossel, einen Verdampfer und einen Verdichter auf. Der Verdichter kann demnach der abgebildete Scrollverdichter 10 sein. Bei dem Scrollverdichter 10 handelt es sich mit anderen Worten um eine Verdrängermaschine nach dem Spiralprinzip.

Der dargestellte Scrollverdichter weist einen mechanischen Antrieb 11 in Form einer Riemenscheibe auf. Die Riemenscheibe ist im Gebrauch mit einem Elektromotor oder einem Verbrennungsmotor verbunden. Alternativ ist es möglich, dass der Scrollverdichter 10 elektrisch oder elektromotorisch angetrieben wird.

Der Scrollverdichter 10 umfasst außerdem ein Gehäuse 20 mit einem oberen Gehäuseteil 21, das die Hochdruckseite des Scrollverdichters 10 verschließt. Im Gehäuse 20 ist eine Gehäusezwischenwand 22 ausgebildet, die eine Niederdruckkammer 30 begrenzt. Die Niederdruckkammer 30 kann auch als Saugraum bezeichnet werden. Im Gehäuseboden 23 ist eine Durchtrittsöffnung ausgebildet, durch die sich eine Antriebswelle 12 erstreckt. Das außerhalb des Gehäuses 20 angeordnete Wellenende 13 ist drehfest mit einem Mitnehmer 14 verbunden, der in die am Gehäuse 20 drehbar gelagerte Riemenscheibe eingreift, so dass von der Riemenscheibe ein Drehmoment auf die Antriebswelle 12 übertragen werden kann.

Die Antriebswelle 12 ist einerseits im Gehäuseboden 23 und andererseits in der Gehäusezwischenwand 22 drehbar gelagert. Die Abdichtung der Antriebswelle 12 gegen den Gehäuseboden 23 erfolgt durch eine erste Wellendichtung 24 und gegen die Gehäusezwischenwand 22 durch eine zweite Wellendichtung 25.

Der Scrollverdichter 10 umfasst des Weiteren eine bewegliche, insbesondere orbitierende, Verdrängerspirale 31 und eine Gegenspirale 32. Die Verdrängerspirale 31 und die Gegenspirale 32 greifen ineinander ein. Die Gegenspirale 32 steht vorzugsweise sowohl in Umfangsrichtung als auch in radialer Richtung fest. Die mit der Antriebswelle 12 gekoppelte bewegliche Verdrängerspirale 31 beschreibt eine kreisförmige Bahn, so dass in an sich bekannter Weise durch diese Bewegung mehrere Gastaschen oder Gaskammern erzeugt werden, die zwischen der Verdrängerspirale 31 und der Gegenspiral 32 radial nach innen wandern. Durch diese orbitierende Bewegung wird Arbeitsmedium, insbesondere ein Kältemittel, angesaugt und mit der weiteren Spiralbewegung und der damit einhergehenden Verkleinerung der Gaskammer verdichtet. Das Arbeitsmedium, insbesondere das Kältemittel, wird von radial außen nach radial innen, beispielsweise linear zunehmend verdichtet und im Zentrum der Gegenspirale 32 in die Hochdruckkammer 40 ausgestoßen.

Um eine orbitierende Bewegung der Verdrängerspirale 31 zu erzeugen, ist ein Exzenterlager 26 ausgebildet, das mit der Antriebswelle 12 durch einen Exzenterstift 27 verbunden ist. Das Exzenterlager 26 und die Verdrängerspirale 31 sind exzentrisch bezogen auf die Gegenspirale 32 angeordnet. Die Gaskammern sind durch Anlage der Verdrängerspirale 31 an die Gegenspirale 32 voneinander druckdicht getrennt. Der radiale Anpressdruck zwischen der Verdrängerspirale 31 und der Gegenspirale 32 wird durch die Exzentrizität eingestellt.

Um eine Rotationsbewegung der Verdrängerspirale 31 zu vermeiden, können Führungsstifte und Führungsbohrungen ausgebildet sein.

Die in den Fig. 1 und 2 dargestellten Scrollverdichter sind kupplungslos. Um trotzdem die Leistung des Verdichters verändern zu können, ist der Scrollverdichter zu- und abschaltbar. Dazu ist vorgesehen, dass die Verdrängerspirale 31 in axialer Richtung, d.h. in einer Richtung parallel zur Antriebswelle 12 beweglich ist. Damit kann die Verdrängerspirale 31 in Richtung der Gegenspirale 32 geschoben werden. Sofern die Verdrängerspirale 31 nicht auf der Gegenspirale 32 aufliegt, wird eine Offenstellung des Scrollverdichters 10 gebildet. In dieser Offenstellung entsteht ein Druckausgleichsspalt zwischen der Verdrängerspirale 31 und der Gegenspirale 32, der die in radialer Richtung voneinander getrennten Gaskammern zwischen der Verdrängerspirale 31 und der Gegenspirale 32 verbindet. Durch einen derartig gebildeten Druckausgleichsspalt strömt verdichtetes Gas aus den weiter innen angeordneten Kammern radial nach außen, wodurch ein Druckausgleich stattfindet. Die Leistung des Scrollverdichters 10 wird dadurch auf null oder zumindest nahezu auf null gesenkt.

Der Gegenspirale 32 ist in Strömungsrichtung die Hochdruckkammer 40 nachgeordnet und steht mit der Gegenspirale 32 in Fluidverbindung durch einen nichtdargestellten Auslass. Der Auslass ist vorzugsweise nicht exakt im Mittelpunkt der Gegenspirale 32 angeordnet, sondern befindet sich außermittig im Bereich einer innersten Kammer zwischen der Verdrängerspirale 31 und der Gegenspirale 32. Dadurch wird erreicht, dass der Auslass von der Lagerbuchse 28 des Exzenterlagers 26 nicht abgedeckt wird und das endverdichtete Arbeitsmedium, insbesondere das endverdichtete Kältemittel, in die Hochdruckkammer 40 ausgestoßen werden kann.

Die Rückwand 33 der Gegenspirale 32 bildet abschnittsweise den Boden der Hochdruckkammer 40. Die Rückwand 33 ist breiter als die Hochdruckkammer 40. Die Hochdruckkammer 40 wird seitlich von der Seitenwand 41 begrenzt. In einem zu der Rückwand 33 der Gegenspirale 32 weisenden Ende der Seitenwand 41 ist eine Ausnehmung 42 ausgebildet, in der ein Dichtring 43 angeordnet ist. Die Seitenwand 41 ist eine Umfangswand, die einen Anschlag der Gegenspirale 32 bildet. Die Hochdruckkammer 40 ist im oberen Gehäuseteil 21 ausgebildet. Diese weist einen rotationssymmetrischen Querschnitt auf.

Das in der Hochdruckkammer 40 gesammelte verdichtete Arbeitsmedium strömt durch einen Auslass 44 aus der Hochdruckkammer 40 in einen Ölabscheider 45, der vorliegend als Zyklon-Abscheider ausgebildet ist. Das verdichtete Arbeitsmedium, insbesondere das verdichtete Kältemittel, strömt durch den Ölabscheider 45 und die Öffnung 46 in den Kreislauf der beispielhaften Klimaanlage.

Die Axialführung der Verdrängerspirale 31 in Richtung der Gegenspirale 32 oder in entgegengesetzte Richtung wird dadurch verwirklicht, dass eine Rückwand 34 der Verdrängerspirale 31 mit einem entsprechenden Druck beaufschlagt wird. Dazu ist eine Gegendruckkammer 50, die auch als Back-Pressure-Raum bezeichnet werden kann, mit der Hochdruckseite des Scrollverdichters 10, insbesondere mit der Hochdruckkammer 40, fluidverbunden. In der Gegendruckkammer 50 ist das Exzenterlager 26 befindlich.

Die Gegendruckkammer 50 wird durch die Rückwand 34 der Verdrängerspirale 31 und durch die Gehäusezwischenwand 22 begrenzt.

Die Gegendruckkammer 50 ist durch die bereits beschriebene zweite Wellendichtung 25 von der Niederdruckkammer 30 fluiddicht getrennt. Ein Dicht- und Gleitring 29 sitzt in einer Ringnut in der Gehäusezwischenwand 22. Zwischen der Gehäusezwischenwand 22 und der Verdrängerspirale 31 ist ein (nicht dargestellter) Spalt ausgebildet. Die Verdrängerspirale 31 stützt sich deshalb in axialer Richtung nicht direkt auf der Gehäusezwischenwand 22 sondern auf dem Dicht- und Gleitring 29 ab und gleitet auf diesem.

Die bisherigen Erläuterungen beziehen sich auf einen Scrollverdichter 10, sowohl gemäß des in Fig. 1 gezeigten Ausführungsbeispiels als auch gemäß des in Fig. 2 abgebildeten Ausführungsbeispiels.

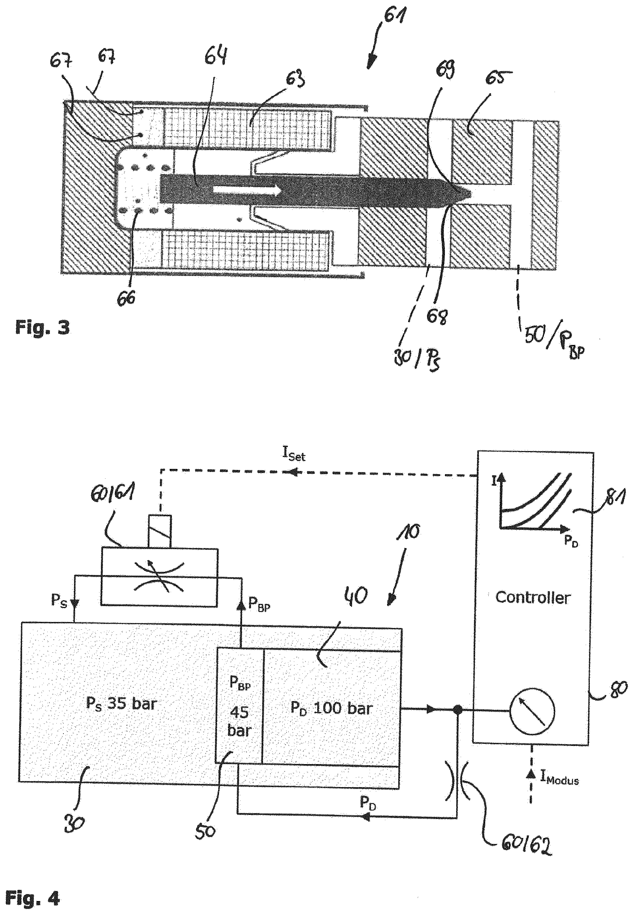

In Fig. 1 ist außerdem dargestellt, dass eine Druckregeleinrichtung 60 mit der Gegendruckkammer 50 fluidverbunden ist. Mit Hilfe der Druckregeleinrichtung 60 ist eine Druckdifferenz zwischen der Gegendruckkammer 50 und der Niederdruckkammer 30 einstellbar. Die Druckregeleinrichtung 60 umfasst ein elektrisch ansteuerbares Regelventil 61. Das elektrisch ansteuerbare Regelventil stellt eine Fluidverbindung zwischen der Gegendruckkammer 50 und der Niederdruckkammer 30 her. Das elektrisch ansteuerbare Regelventil 61 ist in der Fig. 3 näher dargestellt.

Zwischen der Hochdruckkammer 40 und der Gegendruckkammer 50 ist die Drossel 62 angeordnet. Die Druckregeleinheit 60 umfasst demnach die Drossel 62 und das elektrisch ansteuerbare Regelventil 61. Die Gegendruckkammer 50 ist an die Hochdruckseite, insbesondere an die Hochdruckkammer 40, des Scrollverdichters 10 angeschlossen. Über einen ersten Leitungsabschnitt 51 und einen zweiten Leitungsabschnitt 52 ist die Gegendruckkammer 50 mit dem Ölabscheider 45 verbunden. Zwischen dem ersten Leitungsabschnitt 51 und dem zweiten Leitungsabschnitt 52 ist die Drossel 62 ausgebildet. Der erste Leitungsabschnitt 51 ist im Gehäuse 20, insbesondere im oberen Gehäuseteil 21 ausgebildet. Der zweite Leitungsabschnitt 52 ist abschnittsweise ebenfalls im Gehäuse 20, insbesondere in der Umfangswandung 15 ausgebildet.

Der letzte Abschnitt des zweiten Leitungsabschnitts, d.h. der Abschnitt des zweiten Leitungsabschnitts 52, der in der Gegendruckkammer 50 endet, ist als Durchgang in der Gehäusezwischenwandung 22 ausgebildet. Mit Hilfe des in der Gegendruckkammer 50 befindlichen Arbeitsmediums, insbesondere abhängig vom dort herrschenden Druck, kann die Verdrängerspirale 31 in Richtung der Gegenspirale 32 axial bewegt werden. Der von der Verdrängerspirale 31 auf die Gegenspirale 32 in axialer Richtung wirkende Anpressdruck ist durch den in der Gegendruckkammer 50 herrschenden Druck einstellbar.

Hierzu ist zusätzlich das Regelventil 61 vorgesehen. Dieses ist ebenfalls in der Umfangswandung 15 des Gehäuses 20 ausgebildet. Ein erster Ableitungsabschnitt 53 ist wiederum in der Gehäusezwischenwand 22 ausgebildet. Der erste Ableitungsabschnitt 53 endet mittels eines in der Umfangswandung 15 ausgebildeten Leitungsabschnitts in dem elektrisch ansteuerbaren Regelventil 61. In der Umfangswandung 15 ist außerdem ein zweiter Ableitungsabschnitt 54 ausgebildet, der eine Verbindung zwischen dem Regelventil 61 und der Niederdruckkammer 30 herstellt.

Um den in der Gegendruckkammer 50 herrschenden Druck zu regeln und/oder um den in der Gegendruckkammer 50 herrschenden Druck auf variable Betriebspunkte einzustellen, wird im Hochdruckbereich des Scrollverdichters 10, insbesondere in der Hochdruckkammer 40, zunächst der Druckwert P_{D} ermittelt. Dieser Wert wird anschließend an eine Recheneinheit weitergeleitet. Anhand des ermittelten Druckwertes P_{D} wird in der Recheneinheit ein Druckdifferenzwert Δ P_{BP}, der zwischen dem in der Gegendruckkammer 50 herrschenden Gegendruck P_{BP} und dem in der Niederdruckkammer 30 herrschenden Niederdruck P_{S} wirkt, festgelegt. Dies erfolgt vorzugsweise anhand einer Kennlinie und/oder eines Kennfelds mit Hilfe des ermittelten Druckwerts P_{D}. Die Kennlinie und/oder das Kennfeld ist in der Recheneinheit gespeichert.

Die Druckregeleinrichtung 60, insbesondere das elektrisch ansteuerbare Regelventil wird anschließend anhand des festgelegten Druckdifferenzwertes Δ P_{BP} angesteuert. Dies erfolgt durch einen Steuerstrom auf die Magnetspule 63 des Regelventils 61.

Der festgelegte Druckdifferenzwert Δ P_{BP} ist einer elektrischen Stromstärke zum Ansteuern des Ventilelements 61 zugeordnet, so dass eine auf eine Ventilnadel 64 wirkende elektromagnetische Kraft eingestellt werden kann.

Auf die Ventilnadel 64 wirkt sowohl die von einer Feder (siehe hierzu Fig. 3) ausgehende Federkraft, als auch die Kraft bzw. der Druck der Gegendruckkammer 50, sowie die Kraft bzw. der Druck der Niederdruckkammer 30. Zusätzlich wirkt auf die Ventilnadel 64 die durch die Magnetspule 63 generierte elektromagnetische Kraft.

Durch den auf die Magnetspule 63 wirkenden Steuerstrom wird eine elektromagnetische Kraft eingestellt, die dem Druck der Gegendruckkammer 50 und dem Druck der Niederdruckkammer 30 entgegensteht. Das Regelventil 61 regelt sich durch eine ausgeglichene Druckbilanz bzw. durch ein Kräftegleichgewicht selbstständig. Um eine ausgeglichene Kraftbilanz zu erlangen, regelt das Ventil 61 selbstständig den Druck der Gegendruckkammer 50 abhängig von der Kraft bzw. dem Druck, der in der Niederdruckkammer 30 herrscht. Hierzu wird ein Durchtrittsquerschnitt bzw. eine Ringfläche zwischen der Ventilnadel 64 und dem Gehäuse 65 des Regelventils 61 eingestellt (siehe hierzu Fig. 3).

In Fig. 2 ist eine weitere Ausführungsform eines Scrollverdichters 10 dargestellt. Dieser Scrollverdichter 10 weist ebenfalls eine Druckregeleinrichtung 60 auf. Die Druckregeleinrichtung 60 umfasst ebenfalls ein Regelventil 61 sowie eine Drossel 62. Das elektrisch ansteuerbare Regelventil 61 stellt eine Fluidverbindung zwischen der Hochdruckseite, insbesondere der Hochdruckkammer 40, und der Gegendruckkammer 50 her. Die Fluidverbindung zwischen der Hochdruckkammer 40 und der Gegendruckkammer 50 erfolgt indirekt über dem Ölabscheider 45.

In der Nähe der Öffnung 46 ist hierzu ein erster Leitungsabschnitt 71 ausgebildet. Dieser ist im oberen Gehäuseteil 21 ausgebildet. Es folgt ein zweiter Leitungsabschnitt 72, der in der Umfangswandung 15 des Gehäuses 20 ausgebildet ist. Über das Regelventil 61 ist die Gegendruckkammer 50 mit einem Arbeitsmedium, insbesondere einem Kältemittel versorgbar, das über den Ölabscheider 45 aus der Hochdruckkammer 40 in die Gegendruckkammer 50 strömt.

Zwischen dem Regelventil 61 und der Gegendruckkammer 50 ist in der Gehäusezwischenwand 22 eine Zuleitung 73 ausgebildet. Zwischen der Niederdruckkammer 30 und der Gegendruckkammer 50 ist hingegen die Drossel 62 ausgebildet. Zwischen der Gegendruckkammer 50 und der Drossel 62 ist ein Ableitungsabschnitt 74 ausgebildet. Die Fluidverbindung zwischen der Gegendruckkammer 50 und der Niederdruckkammer 30 erfolgt über den Ableitungsabschnitt 74 sowie die Drossel 62.

Auch in dieser Ausführungsform der Erfindung ist eine Druckdifferenz zwischen der Gegendruckkammer 50 und der Niederdruckkammer 30 einstellbar. Hierzu wird ein Druckwert P_{D}, insbesondere ein Hochdruckwert, in dem Hochdruckbereich des Scrollverdichters, insbesondere in der Hochdruckkammer 40 des Scrollverdichters 10, ermittelt. Zusätzlich wird der Druckwert, insbesondere Niederdruck P_{S} in dem Niederdruckbereich, insbesondere in der Niederdruckkammer 30, des Scrollverdichters 10 ermittelt. Diese beiden Werte werden an eine Recheneinheit weitergeleitet. Der Druckdifferenzwert Δ P_{BP} zwischen dem in der Gegendruckkammer 50 herrschenden Gegendruck P_{BP} und dem in der Niederdruckkammer 30 herrschenden Niederdruck P_{S} kann ebenfalls anhand einer Kennlinie mit Hilfe der ermittelten Druckwerte ermittelt werden. Hierzu ist die Kennlinie oder ein Kennfeld in der Recheneinheit gespeichert.

Es folgt ein Ansteuern der Druckregeleinrichtung 60, insbesondere des elektrisch ansteuerbaren Regelventils 61 durch einen Steuerstrom auf die Magnetspule 63. In diesem Fall wirkt auf die Ventilnadel 64 des Regelventils 61 die Federkraft, der Druck P_{BP} bzw. die Kraft der Gegendruckkammer 50 sowie der Druck P_{D} bzw. die Kraft der Hochdruckkammer 40 und die durch die Magnetspule 63 erzeugte elektromagnetische Kraft. Der Druckdifferenzwert Δ P_{BP} kann durch Einstellen eines Durchtrittsquerschnitts zwischen der Ventilnadel 64 und dem Gehäuse 65 des Regelventils 61 eingestellt werden. Somit wird ein Strömungsquerschnitt zwischen dem Hochdruck P_{BP} der Hochdruckkammer 40 und dem Gegendruck P_{BP} der Gegendruckkammer 50 im Regelventil 61 selbstständig durch das Regelventil 61 eingestellt.

In Fig. 3 ist ein Regelventil 61, insbesondere ein Regelventil 61 wie dieses gemäß Ausführungsform der Fig. 1 benötigt wird, dargestellt. In dem Regelventil 61 ist eine Ventilnadel 64 ausgebildet. Ebenfalls zu erkennen ist die Feder 66, deren Kraft auf die Ventilnadel 64 wirkt. Die Ventilnadel 64 ist innerhalb einer Magnetspule 63 angeordnet. Die Magnetspule 63 kann durch Zuleitungen 67 mit Strom beaufschlagt werden, so dass auf die Ventilnadel 64 abhängig vom durch die Zuleitungen 67 strömenden Steuerungsstrom zur Magnetspule 63 eine elektromagnetische Kraft wirkt, die einstellbar ist.

Aufgrund der gestrichelten Linien ist erkennbar, dass das Regelventil 61 eine Zuleitung zur Gegendruckkammer 50 sowie zur Niederdruckkammer 30 aufweist.

Der Kopf 69 der Ventilnadel 64 kann an einem Gehäuseabschnitt 65 derart anliegen, dass ein Ringspalt 68 zwischen dem Gehäuse 65 und dem Kopf 69 gebildet wird. In Abhängigkeit der Größe des Ringspalts 68 kann die Druckdifferenz Δ P_{BP} zwischen der Gegendruckkammer 50 und der Niederdruckkammer 30 eingestellt werden.

In der Gegendruckkammer 50 herrscht der Gegendruck P_{BP}, wohingegen in der Niederdruckkammer 30 der Niederdruck P_{S} wirkt.

In Fig. 4 wird das in Zusammenhang mit der Ausführungsform gemäß Fig. 1 notwendige Verfahren schematisch dargestellt.

In der Hochdruckkammer 40 herrscht demnach ein Druck P_{D} von 100 bar. Dieser Druck wird gemessen und von einer Recheneinheit 80 abgegriffen bzw. an die Recheneinheit 80 weitergeleitet. Der Druck von 100 bar wird aufgrund der Drossel 62 auf 45 bar reduziert, so dass ein von der Hochdruckkammer 40 in die Gegendruckkammer 50 strömendes Arbeitsmedium in der Gegendruckkammer 50 einen Druck P_{BP} von 45 bar aufweist.

Zwischen der Gegendruckkammer 50 und der Niederdruckkammer 30 ist das Regelventil 61 angeordnet. Das Regelventil 61 ist ein mechanisch selbstregelndes Ventil, wobei die in dem Regelventil 61 vorhandene Magnetspule (hier nicht dargestellt) von der Recheneinheit 80 gesteuert wird. Hierzu wird in der Recheneinheit 80 ein Druckdifferenzwert Δ P_{BP} festgelegt, wobei jedem Druckdifferenzwert Δ P_{BP} ein Steuerstrom I zugeordnet ist, so dass anhand des Druckwerts P_{D} und des in der Recheneinheit 80 gespeicherten Kennfeldes 81 ein Steuerstrom I bezüglich der Magnetspule ermittelt wird.

Von der Recheneinheit 80 wird der Wert des Steuerstroms I auf die Magnetspule des Regelventils 61 weitergeleitet. Aufgrund des Steuerstroms I wird die Magnetspule des Ventilelements 61 mit einer elektrischen Stromstärke beaufschlagt, so dass eine auf die Ventilnadel 64 wirkende elektromagnetische Kraft eingestellt werden kann.

### Bezuaszeichenliste

- 10: Scrollverdichter
- 11: mechanischer Antrieb
- 12: Antriebswelle
- 13: Wellenende
- 14: Mitnehmer
- 15: Umfangswandung
- 20: Gehäuse
- 21: oberer Gehäuseteil
- 22: Gehäusezwischenwand
- 23: Gehäuseboden
- 24: erste Wellendichtung
- 25: zweite Wellendichtung
- 26: Exzenterlager
- 27: Exzenterstift
- 28: Lagerbuchse
- 29: Dicht- und Gleitring
- 30: Niederdruckkammer
- 31: Verdrängerspirale
- 32: Gegenspirale
- 33: Rückwand Gegenspirale
- 34: Rückwand Verdrängerspirale
- 40: Hochdruckkammer
- 41: Seitenwand
- 42: Ausnehmung
- 43: Dichtring
- 44: Auslass
- 45: Ölabscheider
- 46: Öffnung
- 50: Gegendruckkammer
- 51: erster Leitungsabschnitt
- 52: zweiter Leitungsabschnitt
- 53: erster Ableitungsabschnitt
- 54: zweiter Ableitungsabschnitt
- 60: Druckregeleinrichtung
- 61: Regelventil
- 62: Drossel
- 63: Magnetspule
- 64: Ventilnadel
- 65: Gehäuse
- 66: Feder
- 67: Zuleitung
- 68: Ringspalt
- 69: Kopf
- 71: erster Leitungsabschnitt
- 72: zweiter Leitungsabschnitt
- 73: Zuleitung
- 74: Ableitungsabschnitt
- 80: Recheneinheit
- 81: Kennfeld

- I: Steuerstrom
- P_{D}: Druck im Hochdruckbereich
- P_{S}: Druck im Niederdruckbereich
- P_{BP}: Gegendruck
- Δ P_{BP}: Druckdifferenzwertes

## Patentansprüche

1. Verdrängermaschine nach dem Spiralprinzip, insbesondere Scrollverdichter (10) oder Scrollexpander, mit einer Hochdruckkammer (40), einer Niederdruckkammer (30) und einer orbitierenden Verdrängerspirale (31), die in eine Gegenspirale (32) derart eingreift, dass zwischen der Verdrängerspirale (31) und der Gegenspirale (32) Kammern gebildet werden, um ein Arbeitsmedium, nämlich COz oder R134a oder R1234yf oder Butan oder Ethanol oder Cyclopentan, aufzunehmen, wobei zwischen der Niederdruckkammer (30) und der Verdrängerspirale (31) eine Gegendruckkammer (50) ausgebildet ist, wobei eine mit der Gegendruckkammer (50) fluidverbundene Druckregeleinrichtung (60) mittels eines von einer Recheneinheit (80) vorgegebenen Sollwerts eine Druckdifferenz zwischen der Gegendruckkammer (50) und der Niederdruckkammer (30) einstellt, **dadurch gekennzeichnet, dass**
die Druckregeleinrichtung (60) ein elektrisch ansteuerbares Regelventil (61) und eine Drossel (62) umfasst und
das elektrisch ansteuerbare Regelventil (61) eine verschiebbare Ventilnadel (64) umfasst, die elektromagnetisch ansteuerbar ist.

2. Verdrängermaschine nach Anspruch 1,
**dadurch gekennzeichnet, dass**
zwischen der Verdrängerspirale (31) und der Gegenspirale (32) radial nach innen wandernde Kammern gebildet werden, um ein Arbeitsmedium, insbesondere ein Kältemittel, aus der Niederdruckkammer (30) anzusaugen, zu verdichten und in die Hochdruckkammer (40) auszustoßen.

3. Verdrängermaschine nach Anspruch 1,
**dadurch gekennzeichnet, dass**
zwischen der Verdrängerspirale (31) und der Gegenspirale (32) radial nach außen wandernde Kammern gebildet werden, um ein Arbeitsmedium, insbesondere ein Arbeitsfluid, aus der Hochdruckkammer (40) aufzunehmen, zu expandieren und in die Niederdruckkammer (30) auszuschieben.

4. Verdrängermaschine nach einem der Ansprüche 1 bis 3,
**dadurch gekennzeichnet, dass**
das elektrisch ansteuerbare Regelventil (61) die Gegendruckkammer (50) mit der Hochdruckkammer (40) oder der Niederdruckkammer (30) fluidverbindet.

5. Verdrängermaschine nach einem der vorhergehenden Ansprüche,
**dadurch gekennzeichnet, dass**
das elektrisch ansteuerbare Regelventil (61) die Gegendruckkammer (50) und die Niederdruckkammer (30) fluidverbindet, wobei zwischen der Hochdruckkammer (40) und der Gegendruckkammer (50) die Drossel angeordnet (62) ist.

6. Verdrängermaschine nach einem der Ansprüche 1 bis 4,
**dadurch gekennzeichnet, dass**
das elektrisch ansteuerbare Regelventil (61) die Hochdruckkammer (40) und die Gegendruckkammer (50) fluidverbindet, wobei zwischen Gegendruckkammer (50) und der Niederdruckkammer (30) die Drossel (62) angeordnet ist.

7. Verdrängermaschine nach einem der vorhergehenden Ansprüche,
**dadurch gekennzeichnet, dass**
die Verdrängerspirale (31) relativ zur Gegenspirale (32) in axialer Richtung beweglich ist.

8. Verdrängermaschine nach Anspruch 7,
**dadurch gekennzeichnet, dass**
ein von der Verdrängerspirale (31) auf die Gegenspirale (32) in axialer Richtung wirkender Anpressdruck durch den in der Gegendruckkammer (50) herrschenden Druck einstellbar ist.

9. Verdrängermaschine nach einem der vorhergehenden Ansprüche, **gekennzeichnet durch**
die Ausbildung als elektrisch und/oder elektromotorisch angetriebene Verdrängermaschine oder als Verdrängermaschine mit mechanischem Antrieb.

10. Verfahren zum Betreiben einer Verdrängermaschine nach einem der Ansprüche 1 bis 9, umfassend die Schritte:
a) Ermitteln eines Druckwerts P_{D} in einem Hochdruckbereich der Verdrängermaschine oder in einem Hochdruckbereich eines Systems, in dem die Verdrängermaschine eingebaut ist,
b) Weiterleiten des ermittelten Druckwerts P_{D} an die Recheneinheit (80),
c) Festlegen eines Druckdifferenzwertes Δ P_{BP} zwischen einem in der Gegendruckkammer (50) herrschenden Gegendruck P_{BP} und einem in der Niederdruckkammer (30) herrschenden Niederdruck P_{S} anhand einer Kennlinie und/oder eines Kennfelds (81) mit Hilfe des ermittelten Druckwerts P_{D}, wobei die Kennlinie und/oder das Kennfeld (81) in der Recheneinheit (80) gespeichert ist,
d) Ansteuern des elektrisch ansteuerbaren Regelventils (61) durch einen Steuerstrom auf eine Magnetspule (63) und selbstständiges Einregeln des Druckdifferenzwertes Δ P_{BP} durch das elektrische Regelventil (61), wobei
beim Ansteuern des elektrisch ansteuerbaren Regelventils (61) der festgelegte Druckdifferenzwert Δ P_{BP} einer elektrischen Stromstärke zum Ansteuern der Ventilnadel (64), die in einer Magnetspule (63) angeordnet ist, zugeordnet wird.

11. Verfahren nach Anspruch 10, umfassend die Schritte:
a) Ermitteln des Druckwerts P_{D} in dem Hochdruckbereich der Verdrängermaschine oder in dem Hochdruckbereich des Systems, in dem die Verdrängermaschine eingebaut ist, und eines Druckwerts P_{S} in der Niederdruckkammer (30) der Verdrängermaschine,
b) Weiterleiten der ermittelten Druckwerte P_{D} und P_{S} an die Recheneinheit (80),
c) Festlegen des Druckdifferenzwertes Δ P_{BP} zwischen dem in der Gegendruckkammer (50) herrschenden Gegendruck P_{BP} und dem in der Niederdruckkammer (30) herrschenden Niederdruck P_{S} anhand der Kennlinie und/oder des Kennfelds (81) mit Hilfe der ermittelten Druckwerte P_{D} und P_{S}, wobei die Kennlinie und/oder das Kennfeld (81) in der Recheneinheit (80) gespeichert ist,
d) Ansteuern des elektrisch ansteuerbaren Regelventils (61), durch einen Steuerstrom auf die Magnetspule (63) und selbstständiges Einregeln des Druckdifferenzwertes Δ P_{BP} durch das elektrische Regelventil (61), wobei beim Ansteuern des elektrisch ansteuerbaren Regelventils (61) der festgelegte Druckdifferenzwert Δ P_{BP} der elektrischen Stromstärke zum Ansteuern der Ventilnadel (64), die in der Magnetspule (63) angeordnet ist, zugeordnet wird.

12. Verfahren nach Anspruch 10 oder 11,
**dadurch gekennzeichnet, dass**
die Magnetspule (63) des elektrisch ansteuerbaren Regelventils (61) mit der elektrischen Stromstärke beaufschlagt wird, sodass eine auf die Ventilnadel (64) wirkende elektromagnetische Kraft eingestellt wird.

13. Fahrzeugklimaanlage mit einer Verdrängermaschine, insbesondere mit einem Scrollverdichter (10), nach einem der Ansprüche 1 bis 9.

14. Fahrzeug, insbesondere Hybridfahrzeug, mit einer Verdrängermaschine nach einem der Ansprüche 1 bis 9 und/oder mit einer Fahrzeugklimaanlage nach Anspruch 13.

15. Fahrzeug, insbesondere Lastkraftwagen, mit einer Verdrängermaschine, insbesondere mit einem Scrollexpander, nach einem der Ansprüche 1 bis 9.

## Claims

1. A displacer machine according to the spiral principle, in particular a scroll compressor (10) or scroll expander, with a high-pressure chamber (40), a low-pressure chamber (30), and an orbiting displacer spiral (31), which engages into a counterspiral (32) in such a way as to form chambers between the displacer spiral (31) and the counterspiral (32), so as to accommodate a working medium, specifically CO₂ or R134a or R1234yf or butane or ethanol or cyclopentane, wherein a counterpressure chamber (50) is formed between the low-pressure chamber (30) and the displacer spiral (31), wherein a pressure regulating device (60) fluidically connected with the counterpressure chamber (50) sets a pressure difference between the counterpressure chamber (50) and the low-pressure chamber (30) by means of a setpoint preset by a computing unit (80), **characterized in that**
the pressure regulating device (60) comprises an electrically actuatable regulating valve (61) and a throttle (62), and that
the electrically actuatable regulating valve (61) comprises a displaceable valve needle (64) that is electromagnetically actuatable.

2. The displacer machine according to claim 1,
**characterized in that**
chambers that wander radially inward form between the displacer spiral (31) and the counterspiral (32), so as to aspirate a working medium, in particular a refrigerant, out of the low-pressure chamber (30), compress it and eject it into the high-pressure chamber (40).

3. The displacer machine according to claim 1,
**characterized in that**
chambers that wander radially outward form between the displacer spiral (31) and the counterspiral (32), so as to accommodate a working medium, in particular a working fluid, from the high-pressure chamber (40), expand it and push it out into the low-pressure chamber (30).

4. The displacer machine according to one of claims 1 to 3, **characterized in that**
the electrically actuatable regulating valve (61) fluidically connects the counterpressure chamber (50) with the high-pressure chamber (40) or the low-pressure chamber (30).

5. The displacer machine according to one of the preceding claims, **characterized in that**
the electrically actuatable regulating valve (61) fluidically connects the counterpressure chamber (50) and the low-pressure chamber (30), wherein the throttle (62) is arranged between the high-pressure chamber (40) and the counterpressure chamber (50).

6. The displacer machine according to one of claims 1 to 4, **characterized in that**
the electrically actuatable regulating valve (61) fluidically connects the high-pressure chamber (40) and the counterpressure chamber (50), wherein the throttle (62) is arranged between the counterpressure chamber (50) and the low-pressure chamber (30).

7. The displacer machine according to one of the preceding claims, **characterized in that**
the displacer spiral (31) can be moved in an axial direction relative to the counterspiral (32).

8. The displacer machine according to claim 7,
**characterized in that**
a contact pressure exerted by the displacer spiral (31) on the counterspiral (32) in an axial direction can be set by the pressure prevailing in the counterpressure chamber (50).

9. The displacer machine according to one of the preceding claims, **characterized by**
the formation as an electrically and/or electric motor driven displacer machine or as a displacer machine with a mechanical drive.

10. A method for operating a displacer machine according to one of claims 1 to 9, comprising the following steps:
a) Determining a pressure value P_{D} in a high-pressure range of the displacer machine or in a high-pressure range of a system that has a built-in displacer machine,
b) Relaying the determined pressure value P_{D} to the computing unit (80),
c) Establishing a pressure difference value Δ P_{BP} between a counterpressure P_{BP} prevailing in the counterpressure chamber (50) and a low pressure P_{S} prevailing in the low-pressure chamber (30) based on a characteristic curve and/or a characteristic field (81) with the help of the determined pressure value P_{D}, wherein the characteristic curve and/or the characteristic field (81) is stored in the computing unit (80),
d) Actuating the electrically actuatable regulating valve (61) via a control current on a solenoid (63) and independently adjusting the pressure difference value Δ P_{BP} via the electric regulating valve (61), wherein, while actuating the electrically actuatable regulating valve (61), the established pressure difference value Δ P_{BP} is assigned to an electric current for actuating the valve needle (64), which is arranged in a solenoid (63).

11. The method according to claim 10, comprising the following steps:
a) Determining the pressure value P_{D} in the high-pressure range of the displacer machine or in the high-pressure range of the system which has a built-in displacer machine, and a pressure value P_{S} in the low-pressure chamber (30) of the displacer machine,
b) Relaying the determined pressure values P_{D} and P_{S} to the computing unit (80),
c) Establishing the pressure difference value Δ P_{BP} between the counterpressure P_{BP} prevailing in the counterpressure chamber (50) and the low pressure P_{S} prevailing in the low-pressure chamber (30) based on the characteristic curve and/or the characteristic field (81) with the help of the determined pressure values P_{D} and P_{S}, wherein the characteristic curve and/or the characteristic field (81) is stored in the computing unit (80),
d) Actuating the electrically actuatable regulating valve (61) via a control current on the solenoid (63) and independently adjusting the pressure difference value Δ P_{BP} via the electric regulating valve (61), wherein, while actuating the electrically actuatable regulating valve (61), the established pressure difference value Δ P_{BP} is assigned to the electric current for actuating the valve needle (64), which is arranged in a solenoid (63).

12. The method according to claim 10 or 11,
**characterized in that**
the solenoid (63) of the electrically actuatable regulating valve (61) is exposed to the electric current, thereby setting an electromagnetic force that acts on the valve needle (64).

13. A vehicle air conditioning system with a displacer machine, in particular with a scroll compressor (10), according to one of claims 1 to 9.

14. A vehicle, in particular hybrid vehicle, with a displacer machine according to one of claims 1 to 9 and/or with a vehicle air conditioning system according to claim 13.

15. A vehicle, in particular a truck, with a displacer machine, in particular with a scroll expander, according to one of claims 1 to 9.

## Revendications

1. Machine à déplacement positif selon le principe de spirale, en particulier compresseur à spirale (10) ou détendeur à spirale, avec une chambre de haute pression (40), une chambre de basse pression (30) et une spirale de déplacement positif orbitale (31), qui vient en prise dans une contre-spirale (32) de telle manière qu'entre la spirale de déplacement positif (31) et la contre-spirale (32) des chambres sont formées pour recevoir un milieu de travail, à savoir du CO₂ ou du R134a ou du R1234yf ou du butane ou de l'éthanol ou du cyclopentane, sachant qu'entre la chambre de basse pression (30) et la spirale de déplacement positif (31) est constituée une chambre de contre-pression (50), sachant qu'un système de régulation de pression (60) relié du point de vue fluide à la chambre de contre-pression (50) règle une différence de pression entre la chambre de contre-pression (50) et la chambre de basse pression (30) au moyen d'une valeur théorique prédéfinie par une unité de calcul (80), **caractérisée en ce que** le système de régulation de pression (60) comprend une soupape de régulation à commande électrique (61) et un papillon (62), et
la soupape de régulation à commande électrique (61) comprend un pointeau de soupape (64) mobile, qui peut être activé de façon électromagnétique.

2. Machine à déplacement positif selon la revendication 1,
**caractérisée en ce qu'**
entre la spirale de déplacement positif (31) et la contre-spirale (32) sont formées des chambres se déplaçant radialement vers l'intérieur pour aspirer, comprimer un milieu de travail, en particulier un frigorigène, à partir de la chambre de basse pression (30) et l'expulser dans la chambre de haute pression (40).

3. Machine à déplacement positif selon la revendication 1,
**caractérisée en ce qu'**
entre la spirale de déplacement positif (31) et la contre-spirale (32) sont formées des chambres se déplaçant radialement vers l'extérieur pour recevoir, détendre un milieu de travail, en particulier un fluide de travail, à partir de la chambre de haute pression (40) et le repousser dans la chambre de basse pression (30).

4. Machine à déplacement positif selon l'une quelconque des revendications 1 à 3,
**caractérisée en ce que**
la soupape de régulation à commande électrique (61) relie du point de vue fluide la chambre de contre-pression (50) à la chambre de haute pression (40) ou à la chambre de basse pression (30).

5. Machine à déplacement positif selon l'une quelconque des revendications précédentes,
**caractérisée en ce que**
la soupape de régulation à commande électrique (61) relie du point de vue fluide la chambre de contre-pression (50) et la chambre de basse pression (30), sachant que le papillon (62) est disposé entre la chambre de haute pression (40) et la chambre de contre-pression (50).

6. Machine à déplacement positif selon l'une quelconque des revendications 1 à 4,
**caractérisée en ce que**
la soupape de régulation à commande électrique (61) relie du point de vue fluide la chambre de haute pression (40) et la chambre de contre-pression (50), sachant que le papillon (62) est disposé entre la chambre de contre-pression (50) et la chambre de basse pression (30).

7. Machine à déplacement positif selon l'une quelconque des revendications précédentes,
**caractérisée en ce que**
la spirale de déplacement positif (31) est mobile en direction axiale par rapport à la contre-spirale (32).

8. Machine à déplacement positif selon la revendication 7,
**caractérisée en ce qu'**
une pression de compression agissant par la spirale de déplacement positif (31) sur la contre-spirale (32) en direction axiale peut être réglée par la pression régnant dans la chambre de contre-pression (50).

9. Machine à déplacement positif selon l'une quelconque des revendications précédentes,
**caractérisée par**
la constitution sous la forme d'une machine à déplacement positif à entraînement électrique et/ou à moteur électrique ou sous la forme d'une machine à déplacement positif avec entraînement mécanique.

10. Procédé destiné à faire fonctionner une machine à déplacement positif selon l'une quelconque des revendications 1 à 9, comprenant les étapes de :
a) détermination d'une valeur de pression P_{D} dans une zone de haute pression de la machine à déplacement positif ou dans une zone de haute pression d'un système dans lequel la machine à déplacement positif est incorporée,
b) transmission de la valeur de pression P_{D} déterminée à l'unité de calcul (80),
c) établissement d'une valeur différentielle de pression ΔP_{BP} entre une contre-pression P_{BP} régnant dans la chambre de contre-pression (50) et une basse pression P_{S} régnant dans la chambre de basse pression (30) à l'aide d'une ligne caractéristique et/ou d'un champ caractéristique (81) à l'aide de la valeur de pression P_{D} déterminée, sachant que la ligne caractéristique et/ou le champ caractéristique (81) est mémorisé(e) dans l'unité de calcul (80),
d) activation de la soupape de régulation à commande électrique (61) par un courant de commande sur une bobine magnétique (63) et réglage automatique de la valeur différentielle de pression ΔP_{BP} par la soupape de régulation électrique (61), sachant que
lors de l'activation de la soupape de régulation à commande électrique (61), la valeur différentielle de pression ΔP_{BP} établie est attribuée à une intensité de courant électrique pour activer le pointeau de soupape (64), qui est disposé dans la bobine magnétique (63).

11. Procédé selon la revendication 10, comprenant les étapes de :
a) détermination de la valeur de pression P_{D} dans la zone de haute pression de la machine à déplacement positif ou dans la zone de haute pression du système dans laquelle la machine à déplacement positif est incorporée et d'une valeur de pression P_{S} dans la chambre de basse pression (30) de la machine à déplacement positif,
b) transmission des valeurs de pression P_{D} et P_{S} à l'unité de calcul (80),
c) établissement de la valeur différentielle de pression ΔP_{BP} entre la contre-pression P_{BP} régnant dans la chambre de contre-pression (50) et la basse pression P_{S} régnant dans la chambre de basse pression (30) à l'aide de la ligne caractéristique et/ou du champ caractéristique (81) à l'aide des valeurs de pression P_{D} et P_{S} déterminées, sachant que la ligne caractéristique et/ou le champ caractéristique (81) est mémorisé(e) dans l'unité de calcul (80),
d) activation de la soupape de régulation à commande électrique (61) par un courant de commande sur la bobine magnétique (63) et réglage automatique de la valeur différentielle de pression ΔP_{BP} par la soupape de régulation électrique (61), sachant que lors de l'activation de la soupape de régulation à commande électrique (61) la valeur différentielle de pression ΔP_{BP} établie est attribuée à l'intensité de courant électrique pour activer le pointeau de soupape (64), qui est disposé dans la bobine magnétique (63).

12. Procédé selon la revendication 10 ou 11,
**caractérisé en ce que**
la bobine magnétique (63) de la soupape de régulation à commande électrique (61) est sollicitée par l'intensité de courant électrique de telle manière qu'une force électromagnétique agissant sur le pointeau de soupape (64) est réglée.

13. Installation de climatisation de véhicule avec une machine à déplacement positif, en particulier avec un compresseur à spirale (10), selon l'une quelconque des revendications 1 à 9.

14. Véhicule, en particulier véhicule hybride, avec une machine à déplacement positif selon l'une quelconque des revendications 1 à 9 et/ou avec une installation de climatisation de véhicule selon la revendication 13.

15. Véhicule, en particulier camion, avec une machine à déplacement positif, en particulier avec un détendeur à spirale, selon l'une quelconque des revendications 1 à 9.
